# EUROPEAN PATENT APPLICATION

(11) **EP 4 704 308 A1**
(43) Date of publication of application: **04.03.2026**
(21) Application number: 25183161.6
(22) Date of filing: 17.06.2025
(51) Int. Cl.: H02K 1/14, H02K 1/16, H02K 15/026, H02K 15/0278, B21D 28/22, B21D 11/06, B21D 28/02

(54) **METHOD OF MANUFACTURING LAMINATED CORE, LAMINATED CORE, AND MOTOR**

(30) Priority: 29.08.2024 JP 2024147692
(71) Applicant: Nidec Corporation, Kyoto-shi, Kyoto 601-8205 (JP)
(72) Inventor: TANIDA, Masafumi, Kyoto, 601-8205 (JP); SAKAI, Hidenori, Kyoto, 601-8205 (JP)
(74) Representative: SSM Sandmair

(57) **Abstract**

A method of manufacturing a laminated core (1) includes: a punching step of punching a steel sheet (80) in a plate shape to form an iron core piece forming member (81) including a back yoke portion (21) extending in one direction and a plurality of tooth portions (22); a stacking step of deforming the iron core piece forming member (81) to one side in the width direction and spirally winding the iron core piece forming member (81), and stacking the back yoke portion (21) and the tooth portions (22) in an overlapping manner in the axial direction, respectively; a first cutting step of cutting the iron core piece forming member (81) in the width direction at a position (CT1) separated by a first distance rearward in a winding direction from a winding start end (81a) of the iron core piece forming member (81) when the iron core piece forming member (81) stacked in the axial direction is viewed in the axial direction to form a winding finish end (81b) on the iron core piece forming member (81); and a second cutting step of cutting the iron core piece forming member (81) in the width direction at a position (CT2) overlapping the winding start end (81a) as viewed in the axial direction to form the winding start end (81a) of the iron core piece forming member (81) to be spirally wound next.

## Description

### Technical Field

The present invention relates to a method of manufacturing a laminated core, a laminated core, and a motor.

### Background Art

A manufacturing method for manufacturing a laminated core by winding a band-shaped iron core piece forming member while deforming the member in a spiral shape is known. For example, as the manufacturing method, there is disclosed a method of manufacturing a laminated core by an apparatus for manufacturing a laminated core including a forming unit for feeding and forming a sheet material to be processed, a winding unit for winding the sheet material processed by the forming unit, and a cutting unit for cutting the wound sheet material at a predetermined position (for example, Patent Literature 1).

### Citation List

### Patent Literature

Patent Literature 1: JP 2008-35598 A

### Summary of Invention

### Technical Problem

Incidentally, a laminated core in which plate-shaped steel sheets are stacked has a plurality of connecting portions that connect the stacked steel plates in the stacking direction. In addition, the laminated core formed of the iron core piece forming member wound while being deformed in a spiral shape includes the connecting portion at a position close to an end portion of the iron core piece forming member in the extending direction in order to prevent the end portion from being turned up.

It is desirable that the plurality of connecting portions be arranged as evenly as possible in the circumferential direction. Therefore, in the laminated core, the circumferential position of the winding start end of the iron core piece forming member and the circumferential position of the winding finish end are desirably separated from each other in the circumferential direction. In this case, the position of the winding start end of the iron core piece forming member changes for each laminated core to be manufactured. Therefore, it is necessary to align the winding start end for each laminated core in the process after the manufacturing, and the manufacturing efficiency of the laminated core decreases.

An object of the present invention is to provide a manufacturing method capable of improving manufacturing efficiency of a cylindrical laminated core formed by spirally winding a band-shaped iron core piece forming member while deforming the iron core piece forming member.

### Solution to Problem

A method of manufacturing a laminated core according an exemplary embodiment of the present invention is a method of manufacturing a laminated core having a cylindrical shape and extending in an axial direction, by spirally winding an iron core piece forming member extending in a band shape in one direction while deforming the iron core piece forming member toward one side in the width direction. The method of manufacturing the laminated core includes: a punching step of punching a steel sheet in a plate shape to form the iron core piece forming member, the iron core piece forming member including: a back yoke portion having a plate shape and extending in the one direction; and a plurality of tooth portions protruding from one side in the width direction of the back yoke portion to one side in the width direction; a stacking step of deforming the iron core piece forming member to one side in the width direction and spirally winding the iron core piece forming member, and stacking the back yoke portion and the tooth portions in an overlapping manner in the axial direction, respectively; a first cutting step of cutting the iron core piece forming member in the width direction at a position separated by a first distance rearward in the winding direction from a winding start end of the iron core piece forming member when the iron core piece forming member stacked in the axial direction is viewed in the axial direction, to form a winding finish end on the iron core piece forming member; and a second cutting step of cutting the iron core piece forming member in the width direction at a position overlapping the winding start end as viewed in the axial direction to form the winding start end of the iron core piece forming member to be spirally wound next.

A laminated core according to an embodiment of the present invention is a laminated core having a cylindrical shape and extending in an axial direction. The laminated core includes an iron core piece having a plate-shaped back yoke portion extending in a spiral shape about a central axis, and a plurality of tooth portions protruding radially inward from the back yoke portion in a state where the back yoke portion and the tooth portions are stacked in a state of overlapping in a thickness direction, respectively. The iron core piece includes a one-side end formed by cutting at one end in the extending direction and the other-side end formed by cutting at the other end in the extending direction. The laminated core includes a portion in which the number of stacked sheets of the iron core piece is smaller by one between the one-side end and the other-side end in a direction opposite to a first direction from the one-side end toward the other-side end of the iron core piece as viewed in the axial direction.

A motor according to an embodiment of the present invention includes a stator including the laminated core and a coil wound around the laminated core, and a rotor disposed radially inward with respect to the stator.

### Advantageous Effects of Invention

According to the present invention, it is possible to provide a manufacturing method capable of improving manufacturing efficiency of a cylindrical laminated core formed by spirally winding a band-shaped iron core piece forming member while deforming the iron core piece forming member.

### Brief Description of Drawings

Fig. 1 is a perspective view illustrating a schematic configuration of a laminated core according to a first embodiment.
Fig. 2 is a plan view of a laminated core.
Fig. 3 is a diagram for describing a schematic configuration of an iron core piece.
Fig. 4 illustrates punching of a steel sheet.
Fig. 5 is a plan view of an iron core piece forming member.
Fig. 6 illustrates a state before an iron core piece forming member is bent in an arc shape.
Fig. 7 illustrates a state where an iron core piece forming member is bent in an arc shape.
Fig. 8 illustrates a state where an iron core piece forming member is spirally wound.
Fig. 9 is a diagram for explaining a first cutting step.
Fig. 10 is a diagram for explaining a second cutting step.
Fig. 11 is a diagram for explaining a joining step.

### Description of Embodiments

Hereinafter, an exemplary embodiment of the present invention will be described in detail with reference to the drawings. The same or corresponding parts in the drawings are denoted by the same reference numerals, and the description thereof will not be repeated. In addition, the respective drawings do not faithfully show the dimensions of actual constituent members, the dimensional ratios of the constituent members, and the like.

The following description shows that a direction parallel to a central axis P of a laminated core 1 is referred to as an axial direction, a direction orthogonal to the central axis P is referred to as a radial direction, and a direction along an arc centered on the central axis P is referred to as a circumferential direction. In the circumferential direction, a direction from one-side end 2a to the other-side end 2b of an iron core piece 2 is defined as a first direction, and the opposite direction is defined as a second direction. However, there is no intention to limit the direction at the time of using the laminated core 1 according to the present invention by the definitions of the directions. In each drawing, the axial direction is indicated by A, and the circumferential direction is indicated by C. Among the circumferential directions, the first direction is indicated by C1, and the second direction is indicated by C2.

The following description also shows that the expression, "fix", "connect", "join", "attach", or the like, is used not only when members are directly fixed to each other, but also when members are fixed to each other with another member interposed therebetween, for example. That is, in the following description, the expression such as fixing includes the meaning of direct and indirect fixing between members.

### (Configuration of laminated core)

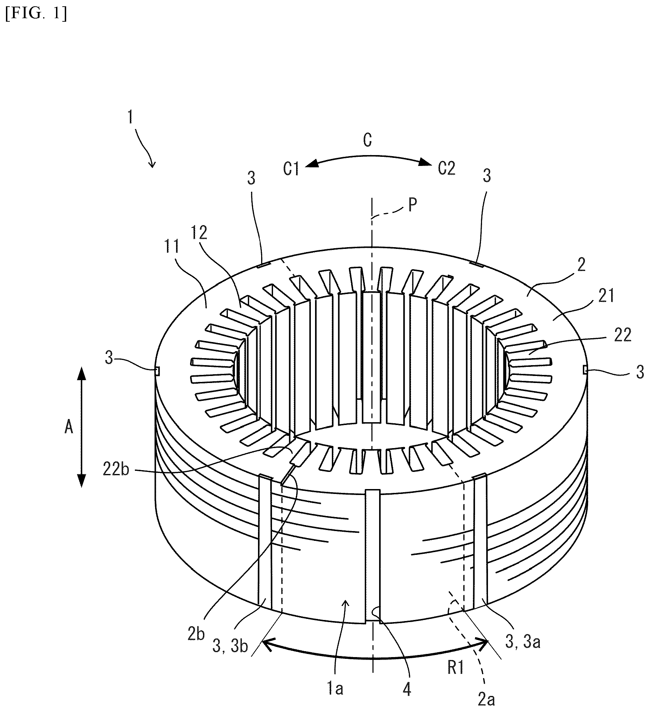

With reference to Figs. 1 to 3, a laminated core 1 according to an embodiment will be described. The laminated core 1 is, for example, a stator core of a motor. The motor includes, for example, a stator including a laminated core 1 and a coil wound around the laminated core 1, and a rotor disposed radially inward with respect to the stator. Since the configuration of the motor is similar to that of a general motor, the description thereof will be omitted.

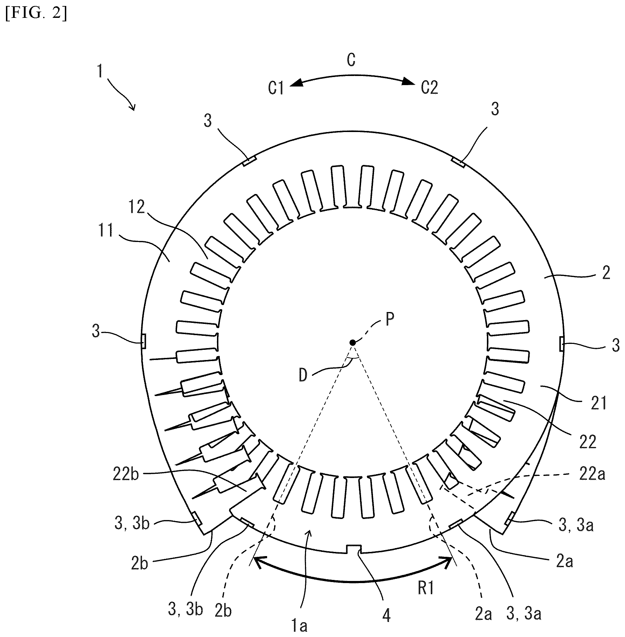

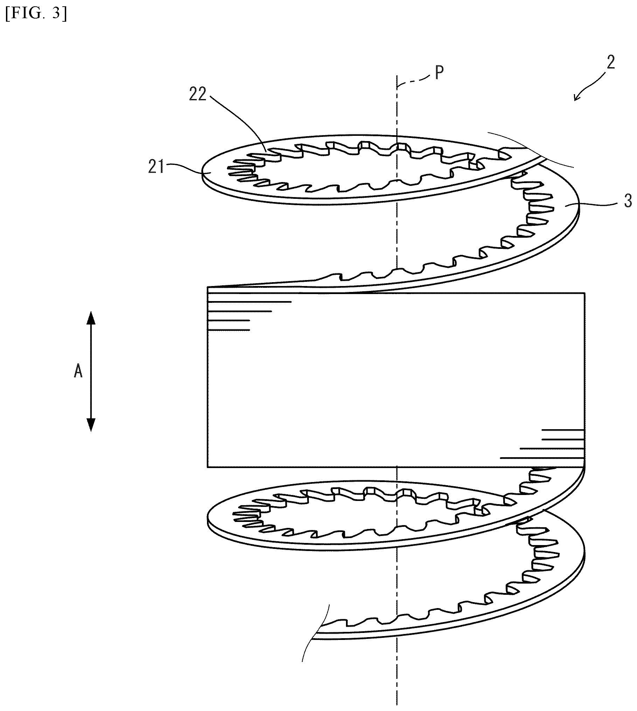

Fig. 1 is a perspective view illustrating a schematic configuration of the laminated core 1. Fig. 2 is a plan view of the laminated core 1. In Fig. 2, for the sake of explanation, vicinities of both end portions of an iron core piece 2 in the extending direction are shown separately from portions adjacent in the stacking direction. Fig. 3 is a diagram for describing a schematic configuration of the iron core piece 2.

As illustrated in Fig. 1, the laminated core 1 extends in the axial direction A around the central axis P. The laminated core 1 includes a back yoke 11 and a plurality of teeth 12. The back yoke 11 has a cylindrical shape extending in the axial direction A about the central axis P. The plurality of teeth 12 extend radially inward from the inner peripheral end surface of the back yoke 11. The plurality of teeth 12 are arranged in the circumferential direction C. Coils (not illustrated) are wound around the plurality of teeth 12. In the present embodiment, the laminated core 1 includes thirty-six teeth 12. The laminated core may have more than thirty-six teeth or less than thirty-six teeth.

The main body of the laminated core 1 is formed of one plate-shaped iron core piece 2 spirally wound around the central axis P and stacked in the axial direction A. The laminated core 1 includes a plurality of connecting portions 3 and a circumferential positioning portion 4.

As illustrated in Fig. 3, the iron core piece 2 extends in a spiral shape about the central axis P. As illustrated in Figs. 1 and 2, the iron core piece 2 has the one-side end 2a located at one end in the extending direction and the other-side end 2b located at the other end in the extending direction. In Figs. 1 and 2, the one-side end 2a is disposed on the lower side.

The iron core piece 2 includes a plate-shaped back yoke portion 21 and a plurality of plate-shaped tooth portions 22. The back yoke portion 21 extends in a spiral shape about the central axis P. The plurality of tooth portions 22 extend radially inward from the inner peripheral end surface of the back yoke portion 21. The plurality of tooth portions 22 are arranged in the circumferential direction C.

In the iron core piece 2, the back yoke portion 21 and the tooth portions 22 are staked in a state of overlapping each other in the thickness direction, respectively. The back yoke portion 21 stacked in the thickness direction constitutes the back yoke 11 of the laminated core 1. The plurality of tooth portions 22 stacked in the thickness direction constitute the teeth 12 of the laminated core 1.

The iron core piece 2 is formed by punching a plate-shaped electromagnetic steel sheet that is a material of the iron core piece 2 to form a band-shaped iron core piece forming member 81, and winding the iron core piece forming member 81 in a spiral shape when viewed in the thickness direction. The one-side end 2a and the other-side end 2b of the iron core piece 2 are formed by cutting the band-shaped iron core piece forming member 81 at a predetermined position. In the present embodiment, the one-side end 2a is a winding start end 81a when the iron core piece forming member 81 is spirally wound, and the other-side end 2b is a winding finish end 81b when the iron core piece forming member 81 is spirally wound. Details of the method of manufacturing the laminated core 1 will be described later.

The circumferential position of the one-side end 2a of the iron core piece 2 is different from the circumferential position of the other-side end 2b. Therefore, in the second direction C2, the iron core piece 2 has a portion 1a where the number of stacked sheets of the iron core piece 2 is smaller by one between the one-side end 2a and the other-side end 2b. The second direction C2 is a direction opposite to the first direction C1 from the one-side end 2a toward the other-side end 2b of the iron core piece 2. In Figs. 1 and 2, a range of the portion 1a where the number of stacked sheets of the iron core piece 2 is smaller by one is indicated by R1.

In the present embodiment, as illustrated in Fig. 2, in the laminated core 1, the portion 1a where the number of stacked sheets of the iron core piece 2 is smaller by one is smaller in size than the rest. That is, the central angle D of the portion 1a where the number of stacked sheets of the iron core piece 2 is smaller by one is less than 180 degrees. As a result, it is possible to obtain the laminated core 1 in which a portion having a short length in the axial direction A is small.

Each of the plurality of connecting portions 3 extends in the stacking direction on the radially outer end surface of the laminated core 1. The plurality of connecting portions 3 connect the back yoke portion 21 in the stacking direction. The plurality of connecting portions 3 are obtained by joining radially outer sides of the iron core piece 2 in the stacking direction. For example, the plurality of connecting portions 3 are obtained by welding the radially outer side of the iron core piece 2 along the axial direction A. The iron core piece may have a recess extending in the stacking direction at a position where the connecting portion 3 is formed on the radially outer end surface of the iron core piece. In this case, the connecting portion may be obtained by welding or the like along the recess.

In the present embodiment, the laminated core 1 includes six connecting portions 3. One first connecting portion 3a among the six connecting portions 3 is located radially outside with respect to the tooth portion 22a closest to the one-side end 2a of the iron core piece 2 as viewed in the axial direction A. One second connecting portion 3b among the six connecting portions 3 is located radially outside with respect to the tooth portion 22b closest to the other-side end 2b of the iron core piece 2 as viewed in the axial direction A.

That is, the plurality of connecting portions 3 include the first connecting portion 3a located on the radially outer end surface with respect to the tooth portion 22a closest to the one-side end 2a of the iron core piece 2, and the second connecting portion 3b located on the radially outer end surface with respect to the tooth portion 22b closest to the other-side end 2b of the iron core piece 2.

As a result, it is possible to obtain the laminated core 1 joined in the stacking direction at a position close to one end and a position close to the other end in the extending direction of the iron core piece 2.

In the present embodiment, the laminated core 1 includes at least three connecting portions 3 arranged in the circumferential direction C. The second connecting portion 3b is adjacent to the first connecting portion 3a in the second direction C2.

The second connecting portion 3b is located on the radially outer end surface with respect to the tooth portion 22b closest to the other-side end 2b of the iron core piece 2. The first connecting portion 3a is located on the radially outer end surface with respect to the tooth portion 22a closest to the one-side end 2a of the iron core piece 2. As described above, in the second direction C2, the iron core piece 2 has a portion 1a where the number of stacked sheets of the iron core piece 2 is smaller by one between the one-side end 2a and the other-side end 2b.

Therefore, with the above-described configuration, it is possible to reduce the portion 1a in which the number of stacked sheets is smaller by one. As a result, it is possible to obtain the laminated core 1 in which a portion having a short length in the axial direction A is small.

The circumferential positioning portion 4 extends in the stacking direction on the radially outer end surface of the laminated core 1. The circumferential positioning portion 4 positions the laminated core 1 in the circumferential direction. In the present embodiment, the circumferential positioning portion 4 is a recess. For example, the laminated core 1 can be positioned in the circumferential direction with respect to an arrangement table by inserting a protrusion installed on the arrangement table on which the laminated core 1 is arranged or the like into the recess.

In the present embodiment, the circumferential positions of the one-side end 2a and the other-side end 2b of the iron core piece 2 are determined with reference to the circumferential position of the circumferential positioning portion 4. Therefore, in all the laminated cores 1 manufactured by a method of manufacturing the laminated core 1 to be described later, the positions of the one-side ends 2a and the positions of the other-side ends 2b with respect to the circumferential positioning portions 4 coincide with each other as viewed in the axial direction A.

### (Laminated core manufacturing method)

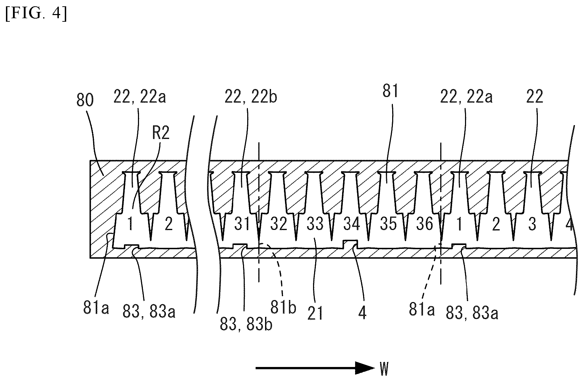

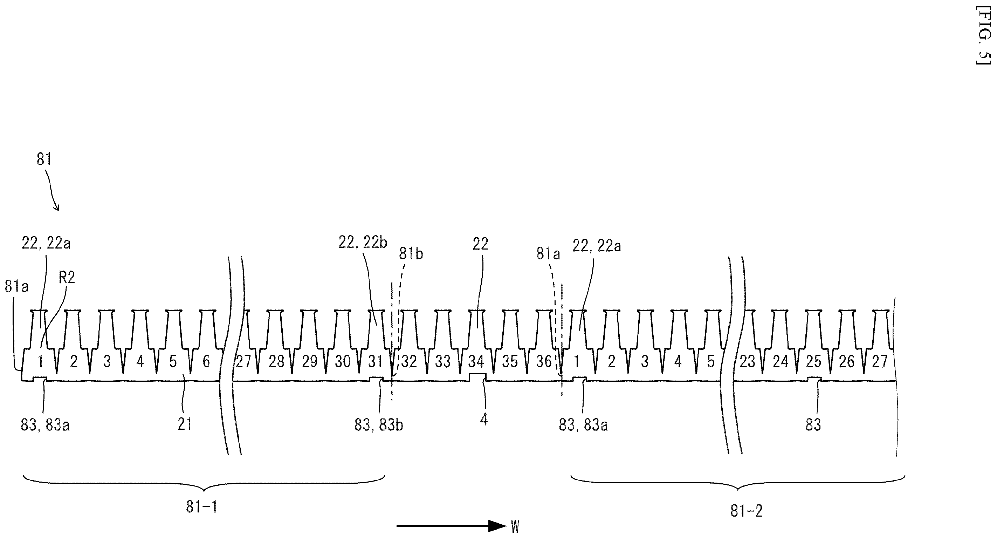

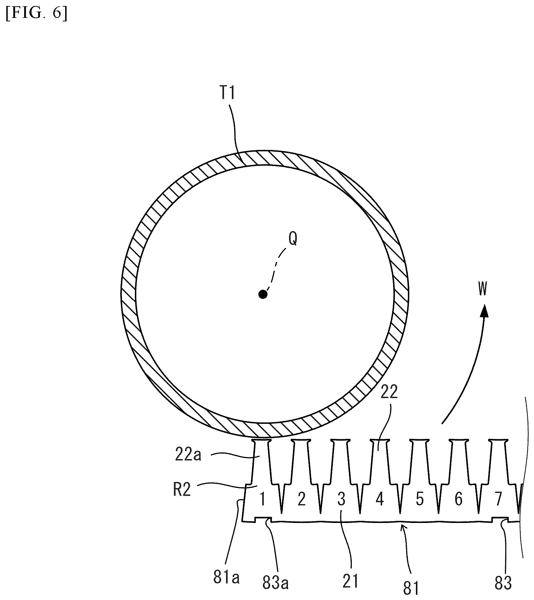

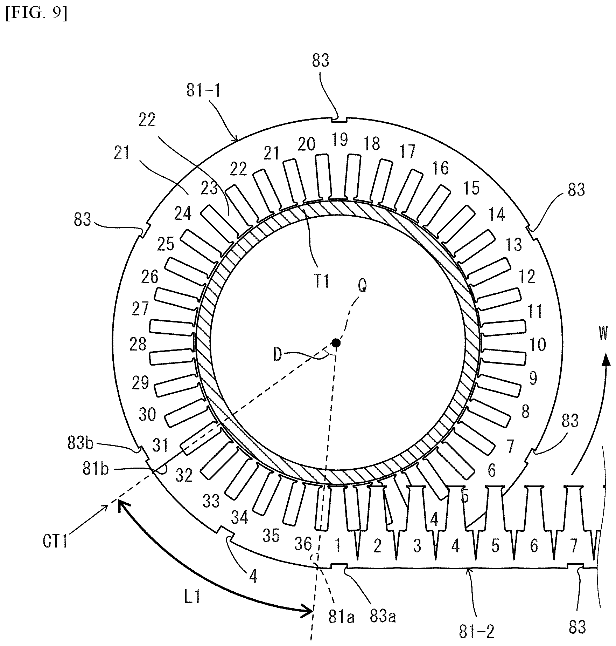

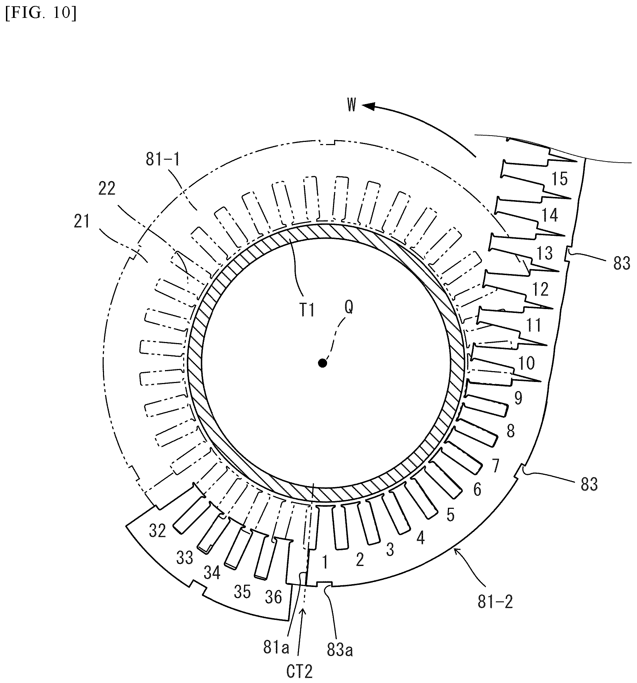

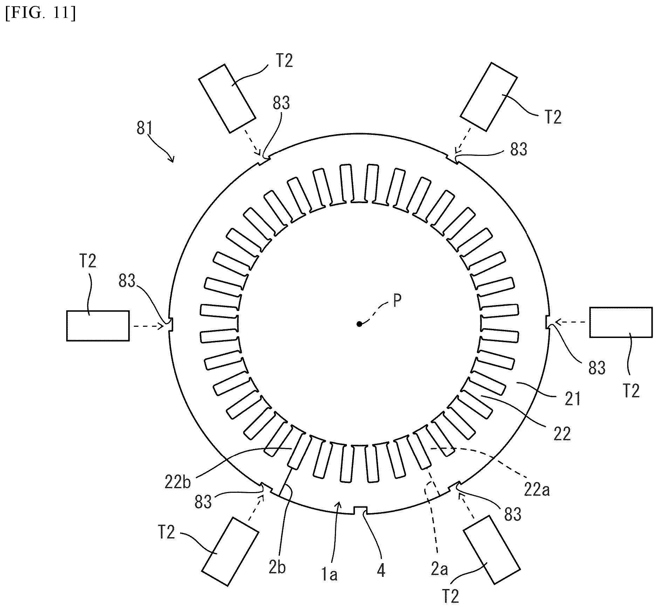

Next, an exemplary method of manufacturing the laminated core 1 having the configuration described above will be described in detail with reference to Figs. 4 to 11. Fig. 4 illustrates an example of punching of a steel sheet 80. Fig. 5 is a plan view of the iron core piece forming member 81. Figs. 6 to 8 are diagrams for explaining a stacking step. Fig. 9 is a diagram for explaining a first cutting step. Fig. 10 is a diagram for explaining a second cutting step. Fig. 11 is a diagram for explaining a joining step.

Hereinafter, for the sake of description, a region of the iron core piece forming member 81 having a boundary between the tooth portions 22 adjacent in the circumferential direction is referred to as an iron core piece region R2. In each drawing, a number 1 is assigned to the iron core piece region R2 located at the winding start end 81a of the iron core piece forming member 81, and numbers in ascending order are assigned in the winding direction W. In the laminated core 1, the same numbers are assigned to the iron core piece regions R2 adjacent in the stacking direction.

The method of manufacturing the laminated core 1 is a method of manufacturing the laminated core 1 in a cylindrical shape extending in the axial direction A about the central axis P by spirally winding the iron core piece forming member 81 extending in a band shape in one direction while deforming the iron core piece forming member to one side in the width direction.

Specifically, the method of manufacturing the laminated core 1 includes a punching step, a stacking step, a first cutting step, a second cutting step, and a joining step.

In the punching step, the band-shaped steel sheet 80 which is a magnetic material is punched to form the band-shaped iron core piece forming member 81. The punching step is performed by press working. Details of the press working will not be described.

In the punching step, the hatched region in Fig. 4 is punched using a punch to form the iron core piece forming member 81 having the back yoke portion 21, the plurality of tooth portions 22, the plurality of recesses 83, and the circumferential positioning portion 4. The iron core piece forming member 81 is a part to be the iron core piece 2 of the laminated core 1. The plurality of recesses 83 are portions to be the connecting portion 3 of the laminated core 1.

As illustrated in Fig. 5, the back yoke portion 21 formed by the punching step has a band shape extending in the longitudinal direction of the steel sheet 80. The plurality of tooth portions 22 extend in the width direction from one side in the width direction of the back yoke portion 21. The width direction of the back yoke portion 21 is a direction intersecting the longitudinal direction.

The iron core piece forming member 81 formed in the punching step includes a plurality of iron core piece forming members 81-1,81-2, ... 81-n to be the iron core pieces 2 of the laminated core 1. Although details will be described later, the iron core piece forming member 81 to be one iron core piece 2 is formed by cutting the iron core piece forming member 81 formed in the punching step at a position to be the winding start end 81a and a position to be the winding finish end 81b of the iron core piece forming member 81 formed in the punching step.

One end in the longitudinal direction of the iron core piece forming member 81 formed in the punching step becomes the winding start end 81a of the iron core piece forming member 81. In the present embodiment, the winding start end 81a of the iron core piece forming member 81 is the one-side end 2a of the iron core piece 2 in the laminated core 1.

The plurality of recesses 83 are located at the other-end in the width direction of the back yoke portion 21. In the present embodiment, the plurality of recesses 83 are located in the No. 1 iron core piece region R2 closest to the winding start end 81a of the iron core piece forming member 81, and in iron core piece regions R2 located every six in the winding direction W from the No. 1 iron core piece region R2.

Specifically, in the present embodiment, one recess 83 is formed in each of the No. 1 iron core piece region R2, the No. 7 iron core piece region R2, the No. 13 iron core piece region R2, the No. 19 iron core piece region R2, the No. 25 iron core piece region R2, and the No. 31 iron core piece region R2. The number and positions of the recesses are not limited thereto. The positions of the recesses are desirably at equal intervals in the winding direction W. The number of recesses is desirably three or more between the No. 1 iron core piece region R2 and the next No. 1 iron core piece region R2.

Among the plurality of recesses 83, the first recess 83a formed in the No. 1 iron core piece region R2 is located at the other end in the width direction of the back yoke portion 21 with respect to the tooth portion 22a closest to the position to be the winding start end 81a in the iron core piece forming member 81.

In the present embodiment, the second recess 83b adjacent to the first recess 83a on the rear side in the winding direction W is formed in the No. 31 iron core piece region R2. The boundary on the front side in the winding direction W with respect to the No. 31 iron core piece region R2 is the winding finish end 81b of the iron core piece forming member 81. That is, the recess 83 formed in the No. 31 iron core piece region R2 is located at the other end in the width direction of the back yoke portion 21 with respect to the tooth portion 22b closest to the position to be the winding finish end 81b in the iron core piece forming member 81.

In the present embodiment, the plurality of recesses 83 are formed in the iron core piece regions R2 located apart every six recesses. Therefore, in the iron core piece forming member 81 in the spirally wound state, the central angle of the recesses 83 adjacent in the circumferential direction is 60 degrees.

In the stacking step, the iron core piece forming member 81 is deformed to one side in the width direction and spirally wound, and the back yoke portion 21 and the tooth portions 22 are stacked so as to overlap each other in the axial direction A, respectively.

Specifically, as illustrated in Fig. 6, the radially inner end surface of the tooth portion 22a closest to the winding start end 81a of the iron core piece forming member 81 is brought into contact with the outer peripheral surface of a columnar winding jig T1 extending in the axial direction A along the central axis Q.

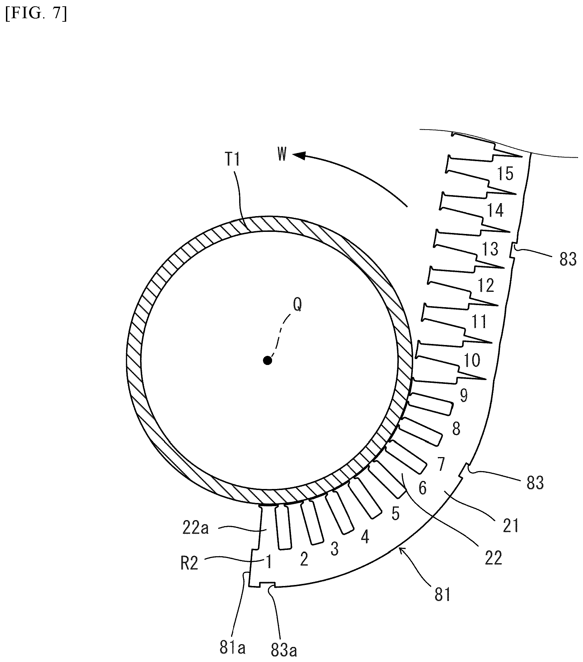

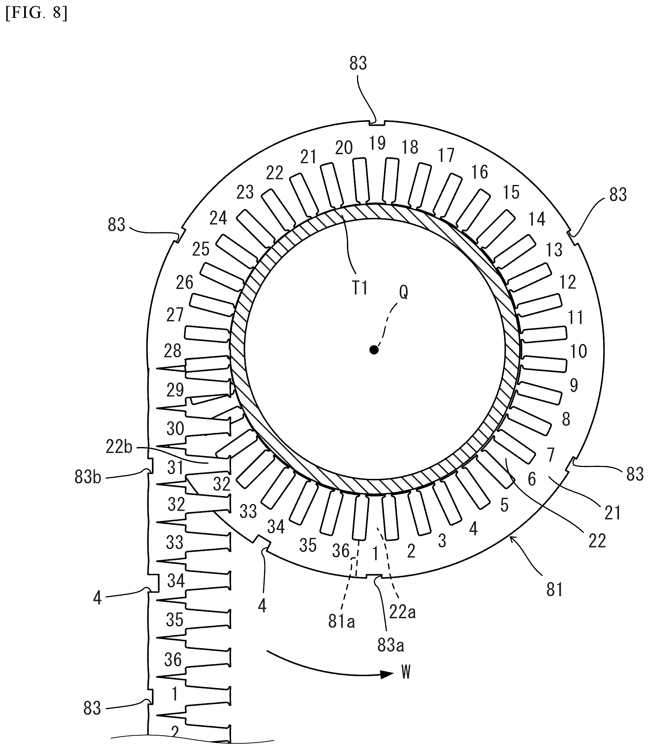

Next, as illustrated in Figs. 7 and 8, the iron core piece forming member 81 is wound around the outer peripheral surface of the winding jig T1. In the stacking step, the iron core piece regions R2 having the same number are stacked in the thickness direction. As a result, the iron core piece forming member 81 is formed in which the back yoke portion 21 extending spirally about the central axis Q and the plurality of tooth portions 22 extending radially inward each are stacked in a state of overlapping each other in the thickness direction.

In the first cutting step, the winding finish end 81b is formed on the iron core piece forming member 81. Specifically, as illustrated in Fig. 9, the iron core piece forming member 81 stacked in the axial direction A are cut in the width direction at a position CT1. The position CT1 is a position separated by a first distance L1 rearward in the winding direction W with respect to the winding start end 81a of the iron core piece forming member 81. As a result, the iron core piece forming member 81-1 to be the iron core piece 2 of one laminated core 1 is formed. The winding finish end 81b formed in the first cutting step is the other-side end 2b of the iron core piece 2 in the laminated core 1.

The spiral iron core piece forming member 81-1 has a portion in which the number of stacked steel sheets 80 is smaller by one sheet between the position of the winding finish end 81b and the position of the winding start end 81a in the winding direction W. This portion is a portion 1a in which the number of stacked sheets of the iron core piece 2 is smaller by one.

In the present embodiment, the position CT1 is a position where the central angle D is less than 180 degrees from the position of the winding start end 81a as viewed in the axial direction A. Specifically, in the present embodiment, the position CT1 is a boundary between the No. 31 iron core piece region R2 in which the second recess 83b is formed and the No. 32 iron core piece region R2.

In the second cutting step, the winding start end 81a of the iron core piece forming member 81-2 to be spirally wound next is formed. Specifically, as illustrated in Fig. 10, in the second cutting step, the iron core piece forming member 81 is cut in the width direction at a position CT2 overlapping the winding start end 81a of the iron core piece forming member 81-1 formed one ahead as viewed in the axial direction A. As a result, the winding start end 81a of the iron core piece forming member 81-2 to be spirally wound next is formed. The winding start end 81a formed in the second cutting step is the one-side end 2a of the iron core piece 2 in the laminated core 1.

Therefore, in all the laminated cores 1 manufactured by the method of manufacturing the laminated core 1, the circumferential positions of the winding start ends 81a, the circumferential positions of the winding finish ends 81b, and the circumferential positions of the plurality of recesses 83 coincide with each other.

In the joining step, the back yoke portion 21 of the iron core piece forming members 81 stacked in the axial direction A in the stacking step is joined and connected in the stacking direction.

Specifically, the back yoke portion 21 is welded in the stacking direction at the positions of the plurality of recesses 83. The method of joining the back yoke portion in the stacking direction is not limited to a specific method. For example, as illustrated in Fig. 11, the back yoke portion may be joined in the stacking direction using a welding device T2 disposed radially outward with respect to the plurality of recesses 83. For example, the back yoke portion may be joined in the stacking direction by rotating the iron core piece forming member about the central axis and sequentially positioning the plurality of recesses at the welding position where the welding device T2 is located.

Through the above steps, the laminated core 1 is manufactured.

As described above, the exemplary method of manufacturing the laminated core 1 according the present embodiment is a method of manufacturing the laminated core 1 having a cylindrical shape and extending along the axial direction A, by spirally winding the iron core piece forming member 81 extending in a band shape in one direction while deforming it toward one side in the width direction. The method of manufacturing the laminated core 1 includes a punching step, a stacking step, a first cutting step, and a second cutting step.

In the punching step, the iron core piece forming member 81 having the plate-shaped back yoke portion 21 extending in one direction and the plurality of tooth portions 22 extending from one side in the width direction of the back yoke portion 21 to one side in the width direction is formed by punching the plate-shaped steel sheet 80. In the stacking step, the iron core piece forming member 81 is deformed to one side in the width direction and spirally wound, and the back yoke portion 21 and the tooth portions 22 are each stacked in the axial direction A.

In the first cutting step, when the iron core piece forming members 81 stacked in the axial direction A are viewed in the axial direction A, the iron core piece forming member 81 is cut in the width direction at the position CT1 separated by a first distance L1 rearward in the winding direction W from the winding start end 81a of the iron core piece forming member 81, thereby forming the winding finish end 81b on the iron core piece forming member 81. In the second cutting step, the iron core piece forming member 81 is cut in the width direction at the position CT2 overlapping the winding start end 81a as viewed in the axial direction A, thereby forming the winding start end 81a of the iron core piece forming member 81 to be spirally wound next.

In this manufacturing method, the positions of the winding start ends 81a of the iron core piece forming members 81 in all the manufactured laminated cores 1 can be the same, and the positions of the winding finish ends 81b can be the same. Therefore, for example, in the step of joining the winding start end 81a and the winding finish end 81b, the winding start end 81a and the winding finish end 81b can be easily positioned at the joining position. That is, it is not necessary to perform an operation of adjusting the positions of the winding start end 81a and the winding finish end 81b for each iron core piece forming member 81 on a workbench, equipment, and the like for performing the subsequent steps. Therefore, the manufacturing efficiency of the laminated core 1 can be improved.

In addition, in all the laminated cores 1 manufactured by this manufacturing method, the positions of the winding start ends 81a and the positions of the winding finish ends 81b coincide with each other. Therefore, for example, when manufacturing a motor having the laminated core 1, it is not necessary to perform an operation of adjusting the position in the circumferential direction for each laminated core 1 with respect to equipment or the like for manufacturing the motor. Therefore, by manufacturing the laminated core 1 by the above-described manufacturing method, the manufacturing efficiency of the motor having the laminated core 1 can be improved.

In the present embodiment, in the first cutting step, the iron core piece forming member 81 is cut in the width direction behind the winding start end 81a of the iron core piece forming member 81 in the winding direction W at the position CT1 where the central angle is less than 180 degrees from the position of the winding start end 81a as viewed in the axial direction A.

According to this manufacturing method, it is possible to manufacture the laminated core 1 in which the winding finish end 81b is located at a position where the central angle is less than 180 degrees rearward in the winding direction W from the winding start end 81a when viewed in the axial direction A.

The steel sheet 80 between the winding finish end 81b of one iron core piece forming member 81 and the winding start end 81a of the next iron core piece forming member 81 is an end member. Therefore, in the above-described manufacturing method, as viewed in the axial direction A, the number of end members can be reduced as compared with the case where the winding finish end 81b is located at a position separated by 180 degrees or more from the winding start end 81a in the winding direction W. As a result, the yield rate of the product with respect to the material can be improved.

In the present embodiment, the method of manufacturing the laminated core 1 further includes a joining step of joining the back yoke portion 21 of the iron core piece forming member 81 stacked in the axial direction A in the stacking step, in the stacking direction. In the punching step, with respect to the tooth portion 22a closest to the position to be the winding start end 81a in the iron core piece forming member 81, the first recess 83a is formed at the end on the other side in the width direction in the back yoke portion 21, and with respect to the tooth portion 22b closest to the position to be the winding finish end 81b in the iron core piece forming member 81, the second recess 83b is formed at the end on the other side in the width direction in the back yoke portion 21. In the joining step, the back yoke portion 21 of the iron core piece forming member 81 stacked in the axial direction A in the stacking step is joined in the stacking direction at the position of the first recess 83a and the position of the second recess 83b.

As a result, the iron core piece forming member 81 having the first recess 83a near the winding start end 81a and the second recess 83b near the winding finish end 81b can be formed. The iron core piece forming member 81 is joined in the stacking direction by the first recess 83a and the second recess 83b. Therefore, it is possible to obtain the laminated core 1 joined in the stacking direction at the position close to the winding start end 81a and the position close to the winding finish end 81b.

As a result, for example, it is not necessary to cut a portion between the joint portion and the winding start end 81a and a portion between the joint portion and the winding finish end 81b in the iron core piece forming member 81, or to fix the portion to a portion of the iron core piece forming member 81 overlapping in the stacking direction. Therefore, the manufacturing efficiency of the laminated core 1 can be improved.

In addition, the laminated core 1 manufactured by the above-described manufacturing method is the cylindrical laminated core 1 extending in the axial direction A and having the iron core piece 2 including the plate-shaped back yoke portion 21 extending in a spiral shape about the central axis P and the plurality of tooth portions 22 protruding radially inward from the back yoke portion 21, and the back yoke portion 21 and the tooth portions 22 are stacked in a state of overlapping in the thickness direction, respectively. The iron core piece 2 has the one-side end 2a formed by cutting at one end in the extending direction and the other-side end 2b formed by cutting at the other end in the extending direction. In the direction C2 opposite to the first direction C1 from the one-side end 2a toward the other-side end 2b of the iron core piece 2 as viewed in the axial direction A, the laminated core 1 has the portion 1a where the number of stacked sheets of the iron core piece 2 is smaller by one between the one-side end 2a and the other-side end 2b.

The laminated core 1 having the above-described configuration is manufactured by the method of manufacturing the laminated core 1. In this manufacturing method, the winding start ends 81a of all the iron core piece forming members 81 manufactured by this manufacturing method can be located at the same position, and the winding finish ends 81b can be located at the same position. Therefore, for example, in the step of joining the winding start end 81a and the winding finish end 81b, the winding start end 81a and the winding finish end 81b can be easily positioned at the joining position. Therefore, the manufacturing efficiency of the laminated core 1 can be improved. Therefore, it is possible to obtain the laminated core 1 that can be manufactured by the manufacturing method with improved manufacturing efficiency.

In the laminated core 1 manufactured by the above-described manufacturing method, the central angle D of the portion 1a where the number of stacked sheets of the iron core piece 2 is smaller by one is smaller than 180 degrees.

By the above-described manufacturing method, it is possible to reduce a portion to be an end material of the steel sheet 80. Accordingly, the yield rate of the product with respect to the material can be improved. Therefore, it is possible to obtain the laminated core 1 that can be manufactured by the manufacturing method with an improved yield rate.

The laminated core 1 manufactured by the above-described manufacturing method has a plurality of connecting portions 3 extending in the axial direction A on the radially outer end surfaces and connecting the back yoke portion 21 in the stacking direction. The plurality of connecting portions 3 include a first connecting portion 3a located on the radially outer end surface with respect to the tooth portion 22a closest to the one-side end 2a of the iron core piece 2, and a second connecting portion 3b located on the radially outer end surface with respect to the tooth portion 22b closest to the other-side end 2b of the iron core piece 2.

The plurality of connecting portions 3 are obtained by welding the plurality of recesses 83 formed in the iron core piece forming member 81 in the axial direction A by the method of manufacturing the laminated core 1. The first connecting portion 3a is located on the radially outer end surface with respect to the tooth portion 22a closest to the winding start end 81a of the iron core piece forming member 81. The second connecting portion 3b is located on the radially outer end surface with respect to the tooth portion 22b closest to the winding finish end 81b of the iron core piece forming member 81.

Therefore, when the laminated core 1 is manufactured, it is not necessary to perform steps of cutting a portion between the joint portion and the winding start end 81a and a portion between the joint portion and the winding finish end 81b in the iron core piece forming member 81, and fixing the portion to a portion of the iron core piece forming member 81 overlapping in the stacking direction. Accordingly, the manufacturing efficiency of the laminated core 1 can be improved. Therefore, it is possible to obtain the laminated core 1 that can be manufactured by the manufacturing method with improved manufacturing efficiency.

In addition, the laminated core 1 has at least three connecting portions 3 arranged in the circumferential direction C of the laminated core 1. The second connecting portion 3b is adjacent to the first connecting portion 3a in the direction C2 opposite to the first direction C1.

As a result, it is possible to reduce the portion 1a where the number of stacked sheets is smaller by one. Accordingly, it is possible to obtain the laminated core 1 in which a portion having a short length in the axial direction A is small. Therefore, it is possible to obtain the laminated core 1 that can be manufactured by a manufacturing method with improved manufacturing efficiency and has a portion having a short length in the axial direction A.

An exemplary motor according to the present embodiment includes a stator including the laminated core 1 and a coil wound around the laminated core 1, and a rotor disposed radially inward with respect to the stator.

As a result, it is possible to obtain a motor having the laminated core 1 that can be manufactured by a manufacturing method with improved manufacturing efficiency. In addition, in all the laminated cores 1 manufactured by the above-described manufacturing method, the positions of the winding start ends 81a and the positions of the winding finish ends 81b coincide with each other. Therefore, in the process of manufacturing the motor having the laminated core 1, it is not necessary to perform an operation of adjusting the position in the circumferential direction for each laminated core 1 with respect to equipment or the like for manufacturing the motor. As a result, the manufacturing efficiency of the motor can be improved. Therefore, a motor that can be manufactured by a manufacturing method with improved manufacturing efficiency can be obtained.

### (Other embodiments)

While an embodiment of the present invention have been described above, the above embodiment is merely an example for implementing the present invention. Accordingly, the present invention is not limited to the embodiment described above, and the embodiment described above may be appropriately modified and implemented without departing from the scope of the present invention.

In the above embodiment, the laminated core 1 is connected in the stacking direction by the connecting portion 3 extending in the stacking direction on the radially outer end surface. However, the laminated core may be connected in the stacking direction by another method. For example, the laminated core may be connected in the stacking direction by a connecting portion extending in the stacking direction on the radially inner end surface. The laminated core may be connected in the stacking direction by an adhesive applied between regions overlapping in the stacking direction in the iron core piece. The laminated core may be connected in the stacking direction by being swaged in the axial direction.

In the embodiment described above, the laminated core 1 includes six connecting portions 3. However, the laminated core may have less than six connecting portions. There may be more than six connecting portions. The laminated core preferably has at least three connecting portions. As a result, the connecting strength in the stacking direction of the laminated core can be secured.

In the above embodiment, the second connecting portion 3b is adjacent to the first connecting portion 3a in the second direction C2. However, the second connecting portion may not be adjacent to the first connecting portion in the second direction. That is, another connecting portion may be positioned between the second connecting portion and the first connecting portion in the second direction.

In the above embodiment, the circumferential positioning portion 4 is a recess. However, the circumferential positioning portion may not be a recess. The circumferential positioning portion may have a configuration capable of positioning in the circumferential direction of the laminated core.

In the above embodiment, the one-side end 2a of the iron core piece 2 is formed by the second cutting step of the method of manufacturing the laminated core 1, and the other-side end 2b of the iron core piece 2 is formed by the first cutting step of the method of manufacturing the laminated core 1. That is, in the above embodiment, the one-side end 2a is the winding start end 81a of the iron core piece forming member 81, and the other-side end 2b is the winding finish end 81b of the iron core piece forming member 81. However, the one-side end of the iron core piece may be formed by the first cutting step of the method of manufacturing the laminated core, and the other-side end of the iron core piece may be formed by the second cutting step of the method of manufacturing the laminated core. That is, the one-side end may be a winding finish end of the iron core piece forming member, and the other-side end may be a winding start end of the iron core piece forming member.

In the stacking step of the above embodiment, the iron core piece forming member 81 is wound around the outer circumferential surface of the winding jig T1. However, in the stacking step, the iron core piece forming member may be wound around the outer circumferential surface of the winding jig by rotating the winding jig rotating together with the iron core piece forming member in a direction opposite to the winding direction W.

### (Configuration example)

The present technique can also have configurations as described below.
(1) A laminated core manufacturing method is a method of manufacturing a laminated core having a cylindrical shape and extending in an axial direction, by spirally winding an iron core piece forming member extending in a band shape in one direction while deforming the iron core piece forming member toward one side in a width direction. The method of manufacturing the laminated core includes: a punching step of punching a steel sheet in a plate shape to form the iron core piece forming member, the iron core piece forming member including: a back yoke portion having a plate shape and extending in the one direction; and a plurality of tooth portions protruding from one side in the width direction of the back yoke portion to one side in the width direction; a stacking step of deforming the iron core piece forming member to one side in the width direction and spirally winding the iron core piece forming member, and stacking the back yoke portion and the tooth portions in an overlapping manner in the axial direction, respectively; a first cutting step of cutting the iron core piece forming member in the width direction at a position separated by a first distance rearward in the winding direction from a winding start end of the iron core piece forming member when the iron core piece forming member stacked in the axial direction is viewed in the axial direction, to form a winding finish end on the iron core piece forming member; and a second cutting step of cutting the iron core piece forming member in the width direction at a position overlapping the winding start end as viewed in the axial direction to form the winding start end of the iron core piece forming member to be spirally wound next.
(2) In the method of manufacturing the laminated core described in (1), the first cutting step includes cutting the iron core piece forming member in the width direction behind the winding start end of the iron core piece forming member in the winding direction at a position where a central angle is less than 180 degrees from a position of the winding start end as viewed in the axial direction.
(3) The method of manufacturing the laminated core described in (1) of (2) further includes a joining step of joining the back yoke portion of the iron core piece forming member stacked in the axial direction in the stacking step, in the stacking direction. The punching step includes forming a first recess at the other-side end in the width direction of the back yoke portion with respect to the tooth portion closest to a position to be the winding start end in the iron core piece forming member, and forming a second recess at the other-side end in the width direction of the back yoke portion with respect to the tooth portion closest to a position to be the winding finish end in the iron core piece forming member. The joining step includes joining the back yoke portion of the iron core piece forming member stacked in the axial direction in the stacking step, in the stacking direction at a position of the first recess and a position of the second recess.
(4) A laminated core is a laminated core having a cylindrical shape and extending in an axial direction. The laminated core includes an iron core piece having a plate-shaped back yoke portion extending in a spiral shape about a central axis, and a plurality of tooth portions protruding radially inward from the back yoke portion in a state where the back yoke portion and the tooth portions are stacked in a state of overlapping in a thickness direction, respectively. The iron core piece includes a one-side end formed by cutting at one end in the extending direction and the other-side end formed by cutting at the other end in the extending direction. The laminated core includes a portion in which the number of stacked sheets of the iron core piece is smaller by one between the one-side end and the other-side end in a direction opposite to a first direction from the one-side end toward the other-side end of the iron core piece as viewed in the axial direction.
(5) In the laminated core described in (1), the central angle of a portion in which the number of stacked sheets of the iron core piece is smaller by one is less than 180 degrees.
(6) The laminated core described in (4) or (5) includes a plurality of connecting portions each extending in the axial direction on a radially outer end surface and connecting the back yoke portion in the stacking direction. The plurality of connecting portions include a first connecting portion located on the radially outer end surface with respect to one of the tooth portions closest to the one-side end of the iron core piece, and a second connecting portion located on the radially outer end surface with respect to one of the tooth portions closest to the other-side end of the iron core piece.
(7) The laminated core described in (6) includes at least three of the connecting portions arranged in the circumferential direction of the laminated core. The second connecting portion is adjacent to the first connecting portion in a direction opposite to the first direction.
(8) A motor includes a stator including the laminated core described in any one of (4) to (7) and a coil wound around the laminated core, and a rotor disposed radially inward with respect to the stator.

### Industrial Applicability

The present invention is applicable to a method of manufacturing a laminated core in which an electromagnetic steel sheet in a band shape is punched to form a back yoke portion extending linearly in the longitudinal direction of the electromagnetic steel sheet and a plurality of teeth extending in the width direction of the electromagnetic steel sheet.

### Reference Signs List

1 laminated core
1a portion in which the number of stacked sheets is smaller by one
2 iron core piece
2a one-side end
2b the other-side end
3 connecting portion
3a first connecting portion
3b second connecting portion
4 circumferential positioning portion
11 back yoke
12 tooth
21 back yoke portion
22, 22a, 22b tooth portion
80 steel sheet
81 iron core piece forming member
81a winding start end
81b winding finish end
83 recess
83a first recess
83b second recess
CT1 position separated by a first distance rearward in the winding direction
CT2 position overlapping winding start end
L1 distance between winding start end and winding finish end
T1 winding jig
T2 welding device
R1 range of portion in which the number of stacked sheets of iron core piece is smaller by one
R2 iron core piece region
P central axis of laminated core
Q central axis of winding jig

## Claims

1. A method of manufacturing a laminated core (1) having a cylindrical shape and extending in an axial direction by spirally winding an iron core piece forming member (81) extending in a band shape in one direction while deforming the iron core piece forming member (81) to one side in a width direction, the method **characterized by** comprising:
a punching step of punching a steel sheet (80) in a plate shape to form the iron core piece forming member (81), the iron core piece forming member (81) including: a back yoke portion (21) having a plate shape and extending in the one direction; and a plurality of tooth portions (22) protruding from one side in the width direction of the back yoke portion (21) to one side in the width direction;
a stacking step of deforming the iron core piece forming member (81) to one side in the width direction and spirally winding the iron core piece forming member (81), and stacking the back yoke portion (21) and the tooth portions (22) in an overlapping manner in the axial direction, respectively;
a first cutting step of cutting the iron core piece forming member (81) in the width direction at a position (CT1) separated by a first distance rearward in a winding direction from a winding start end (81a) of the iron core piece forming member (81) when the iron core piece forming member (81) stacked in the axial direction is viewed in the axial direction to form a winding finish end (81b) on the iron core piece forming member (81); and
a second cutting step of cutting the iron core piece forming member (81) in the width direction at a position (CT2) overlapping the winding start end (81a) as viewed in the axial direction to form the winding start end (81a) of the iron core piece forming member (81) to be spirally wound next.

2. The method of manufacturing the laminated core (1) according to claim 1, **characterized in that**
the first cutting step includes cutting the iron core piece forming member (81) in the width direction behind the winding start end (81a) of the iron core piece forming member (81) in the winding direction at a position where a central angle is less than 180 degrees from a position of the winding start end (81a) as viewed in the axial direction.

3. The method of manufacturing the laminated core (1) according to claim 1 or 2, **characterized by** further comprising
a joining step of joining the back yoke portion (21) of the iron core piece forming member (81) stacked in the axial direction in the stacking step, in a stacking direction, **characterized in that**
the punching step includes:
forming a first recess (83a) at an end portion of the back yoke portion (21) on another side in the width direction with respect to one of the tooth portions (22) closest to a position to be the winding start end (81a) in the iron core piece forming member (81); and
forming a second recess (83b) at an end portion of the back yoke portion (21) on the other side in the width direction with respect to one of the tooth portions (22) closest to a position to be the winding finish end (81b) in the iron core piece forming member (81), and
the joining step includes joining the back yoke portion (21) of the iron core piece forming member (81) stacked in the axial direction in the stacking step, in the stacking direction at a position of the first recess (83a) and a position of the second recess (83b).

4. A laminated core (1) in a cylindrical shape and extending in an axial direction, the laminated core (1) including: an iron core piece (2) including a back yoke portion (21) having a plate shape and extending in a spiral shape about a central axis; and a plurality of tooth portions (22) protruding radially inward from the back yoke portion (21), the back yoke portion (21) and the tooth portions (22) being staked in a state overlapping each other in a thickness direction, **characterized in that**
the iron core piece (2) includes a one-side end (2a) formed by cutting at one end in an extending direction and another-side end (2b) formed by cutting at another end in the extending direction, and
the laminated core (1) includes a portion (1a) in which a number of stacked sheets of the iron core piece (2) is smaller by one between the one-side end (2a) and the another-side end (2b) in a direction opposite to a first direction from the one-side end (2a) toward the another-side end (2b) of the iron core piece (2) as viewed in the axial direction.

5. The laminated core (1) according to claim 1, **characterized in that**
a central angle of the portion (1a) in which the number of stacked sheets of the iron core piece is smaller by one is less than 180 degrees.

6. The laminated core (1) according to claim 4, **characterized by** comprising:
a plurality of connecting portions (3) each extending in the axial direction on a radially outer end surface and connecting the back yoke portion (21) in a stacking direction, **characterized in that**
the plurality of connecting portions (3) include:
a first connecting portion (3a) located on the radially outer end surface with respect to one of the tooth portions (22) closest to the one-side end (2a) of the iron core piece (2); and
a second connecting portion (3b) located on the radially outer end surface with respect to one of the tooth portions (22) closest to the another-side end(2b) of the iron core piece (2).

7. The laminated core (1) according to claim 6, **characterized in that**
at least three of the connecting portions (3) are arranged in a circumferential direction of the laminated core (1), and
the second connecting portion (3b) is adjacent to the first connecting portion (3a) in a direction opposite to the first direction.

8. A motor **characterized by** comprising:
a stator including:
the laminated core (1) according to any one of claims 4 to 7; and
a coil wound around the laminated core (1); and
a rotor disposed radially inward with respect to the stator.
